# EUROPÄISCHE PATENTANMELDUNG

(11) **EP 0 849 073 A2**
(43) Veröffentlichungstag der Anmeldung: **24.06.1998**
(21) Anmeldenummer: 97120538.0
(22) Anmeldetag: 24.11.1997
(51) Int. Cl.: B32B 27/18, B32B 27/32

(54) **Beidseitig siegelfähige orientierte Polyolefin-Mehrschichtfolie, Verfahren zu ihrer Herstellung und ihre Verwendung**

(30) Priorität: 18.12.1996 DE 19652734
(71) Anmelder: Hoechst Trespaphan GmbH, 66539 Neunkirchen-Wellesweiler (DE)
(72) Erfinder: Speith-Herfurth, Angela, Dl., 63329 Egelsbach (DE); Rasp, Wolfgang, Dl., 66424 Homburg (DE); Hansohn, Robert, 66459 Kirkel (DE)
(74) Vertreter: Luderschmidt, Schüler & Partner GbR

(57) **Zusammenfassung**

Die Erfindung betrifft eine beidseitig siegelfähige, bedruckbare, orientierte Polyolefin-Mehrschichtfolie, aus mindestens einer Basisschicht und beidseitigen siegelfähigen Deckschichen die ein Kohlenwasserstoffharz enthält. Beide Deckschichten enthalten Silikonöl und mindestens eine Oberfläche der Folie ist oberflächenbehandelt.

## Beschreibung

Die Erfindung betrifft eine orientierte Polyolefin-Mehrschichtfolie, umfassend eine Basisschicht, die im wesentlichen Polypropylen enthält, und beidseitig siegelfähige Deckschichten. Die Folien zeichnen sich durch einen niedrigen Reibungskoeffizienten in Verbindung mit einer ausgezeichneten Siegelfähigkeit auf beiden Seiten der Folie und hervorragende Bedruckbarkeit aus.

Im Stand der Technik sind Folien mit einem niedrigen Reibungskoeffizienten beschrieben. Die Anforderungen an die Verarbeitungsfähigkeit der Folien und deren Lauffähigkeit auf automatischen Maschinen sind im Laufe der Jahre ständig gestiegen. Aus diesem Grund werden immer niedrigere Reibungskoeffizienten gefordert, wobei heute der Begriff "niedrig" Reibungswerte in einer Größenordnung von 0,3 bis 0,1 umfaßt, wohingegen vor einigen Jahren eine Reibung von 0,4 bis 0,5 durchaus als ausgezeichnet niedrig galt.

Es ist aus dem Stand der Technik bekannt, Polyolefinfolien zur Verbesserung der Gleiteigenschaften ein Carbonsäureamid zuzusetzen. Die beschriebenen Folien enthalten Amide in den Deckschichten oder in der Basis- und den Deckschichten.

Im Stand der Technik wird weiterhin als ausgezeichnetes Gleitmittel zur Realisierung von Reibungswerten kleiner als 0,3 der Zusatz von Silikonöl in polyolefinischen Folien beschrieben. Einige Schriften empfehlen die Verwendung des Silikonöls in Kombination mit anderen Gleitmitteln.

Die EP-A-0 182 463 beschreibt eine mehrschichtige Folie, welche 0,05 bis 0,2 Gew.-% tertiäres aliphatisches Amin in der Basisschicht und eine Kombination von Silikonöl und SiO₂ in der siegelfähigen Deckschicht enthält. Nach der Beschreibung erhält man durch das überraschende Zusammenwirken von SiO₂, Silikonöl und Amin in Verbindung mit einer ausgewählten Deckschichtdicke von kleiner als 0,8 µm Folien mit Reibungskoeffizienten von 0,3 und kleiner. Trotz dieses hervorragenden Reibungskoeffizienten sind die Verarbeitungseigenschaften der Folie mangelhaft. Sie ist insbesondere nicht bedruckbar und daher für viele Anwendungen nicht geeignet.

Die EP-A-0 143 130 offenbart Folien, die ein Carbonsäureamid in der Basisschicht und ebenfalls die Kombination von Silikonöl und SiO₂ in der Deckschicht enthalten. Ähnlich wir in der oben erwähnten EP-A-0 182 463 wird eine synergistische Wirkung der drei ausgewählten Komponenten auf den Reibungskoeffizienten beschrieben. Auch diese Folien sind trotz ihrer vorteilhaften Gleitfähigkeit mangelhaft in der Verarbeitung. Auch ihnen fehlt die wichtige Eigenschaft Bedruckbarkeit.

Die EP-A-0 194 588 und EP-A-0 217 598 beschreiben eine weiterentwickelte Folie, welche trotz guter Gleiteigenschaften durch Silikonölzusatz gut bedruckbar ist. Bei diesen Folien wird nur in eine Deckschicht Silikonöl, gegebenenfalls in Kombination mit SiO₂, eingearbeitet. Die zweite silikonölfreie Deckschicht wird zur Verbesserung der Bedruckbarkeit coronabehandelt. Anschliessend erfolgt die Übertragung von Silikonöl auf die Oberfläche dieser behandelten zweiten Deckschicht durch Kontakt mit der silikonölhaltigen ersten Deckschicht. Durch diesen Kunstgriff erhält man eine mit Silikonöl ausgerüstete Folie mit guten Gleiteigenschaften, die gleichzeitig auf der coronabehandelten Seite gut bedruckbar und dennoch siegelfähig ist. Dieser Folie haftet der Nachteil an, daß sie nur einseitig bedruckbar ist. Dies ist besonders nachteilig für die Verwendung der Folie im Verpackungsbereich, insbesondere dort wo Bedarf für eine beidseitig bedruckbare Folie mit guten Gleiteigenschaften besteht.

Das obengenannte Verfahren stellte bisher die einzige bekannte Möglichkeit dar die vorteilhafte Wirkung des Siliconöls auch bei einer oberflächenbehandelten siegelfähigen Deckschicht zu nutzen. Es bestand in der Fachwelt bisher die Überzeugung, daß eine siliconölhaltige Deckschicht nicht coronabehandelt werden kann, da diese Oberflächenbehandlung zu einer Vernetzung des Siliconöls führt, wodurch die Siegelfähigkeit der ursprünglich siegelfähigen Deckschicht zerstört wird.

Der vorliegenden Erfindung liegt somit die Aufgabe zugrunde, eine mehrschichtige Polypropylenfolie zur Verfügung zu stellen, die einen niedrigen Reibungskoeffizienten aufweistund beidseitig siegelfähig und bedruckbar ist.

Erfindungsgemäß wird diese Aufgabe gelöst durch eine Folie der eingangs genannten Gattung, deren kennzeichnendes Merkmal darin besteht, daß die Folie ein Kohlenwasserstoffharz enthält und beide Deckschichten Silikonöl enthalten und mindestens eine Oberfläche der Folie oberflächenbehandelt ist.

Es wurde gefunden, daß die unerwünschte Wechselwirkung zwischen dem Siliconöl und der Coronabehandlung, die zur Zerstörung der Siegelfähigkeit führt, durch den Zusatz des Kohlenwasserstoffharzes in der Basisschicht verhindert werden kann. Damit ist es überraschenderweise möglich die Oberflächenbehandlung einer siegelfähigen Folie durchzuführen, welche Siliconöl in ihrer siegelfähigen Deckschicht enthält.

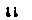 Oberflächenbehandlung 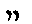 umfaßt im Sinne der vorliegenden Erfindung jedes Verfahren, das geeignet ist die Oberflächenspannung der Folienoberfläche zu verbessern bzw. die Haftung der Folienoberflächen gegenüber Druckfarben, Beschichtungen, Laminierungen etc. zu verbessern. Verfahren zur Oberflächenbehandlung sind vorzugsweise die Coronabehandlung oder die Flammbehandlung.

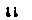 Siliconöle 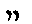 umfassen im Sinne der vorliegenden Erfindung Siliconöle mit einer Viskosität im Bereich von 350 bis 500.000 Centistokes, wie beispielsweise Polydialkylsiloxanemit C1- bis C4-Alkylresten, Polyalkyl-Phenyl-Siloxane, Polyethermodifizierte Siliconöle, olefinmodifzierte Siliconöle. Unter den vorgenannten sind insbesondere Polydimethylsiloxane bevorzugt. Im allgemeinen enthalten die Deckschichten 0.1 bis 2.0 Gew.-% Siliconöl, vorzugsweise 0,3 bis 1,0 Gew.-%, jeweils bezogen auf das Gewicht der Deckschicht.

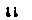 Basisschich 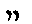 t ist im Sinne der vorliegenden Erfindung diejenige Schicht welche mindestens 50%, vorzugsweise 80 bis 90% der Gesamtfoliendicke ausmacht.

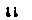 Deckschichten 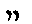 sind im Sinne der vorliegenden Erfindung die äußersten Folienschichten.

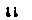 Kohlenwasserstoffharze 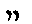 sind im Sinne der vorliegenden Erfindung niedermolekulare Polymere, deren mittleres Molekulargewicht (Gewichtsmittel Mw) im allgemeinen in einem Bereich von 300 bis 8 000 liegt und von den Polypropylenen verschieden sind.

Die Basisschicht der erfindungsgemäßen Mehrschichtfolie enthält im wesentlichen ein Polyolefin, vorzugsweise ein Propylenpolymer, und ein Kohlenwasserstoffharz und gegebenenfalls weitere zugesetzte Additive in jeweils wirksamen Mengen. Im allgemeinen enthält die Basisschicht mindestens 50 Gew.-%` vorzugsweise 75 bis 98 Gew.-%, insbesondere 90 bis 98 Gew.-%, des Propylenpolymeren (jeweils bezogen auf das Gewicht der Basisschicht).

Das Polypropylenpolymere enthält mindestens 90 bis 100 Gew.-%, vorzugsweise 98-100Gew.-%, Propylen und besitzt einen Schmelzpunkt von 140°C oder höher, vorzugsweise 150 bis 170°C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 5 Gew.-% oder weniger, Copolymere von Propylen mit C₄-C₈-α-Olefinen mit einem α-Olefingehalt von 5 Gew.-% oder weniger stellen bevorzugte Propylenpolymere für die Basisschicht dar, wobei isotaktisches Polypropylen besonders bevorzugt ist. Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230 °C und einer Kraft von 21,6 N (DIN 53 735). Die angegebenen Gewichtsprozente beziehen sich auf das jeweilige Copolymer.

Erfindungsgemäß enthält die Basisschicht ein Kohlenwasserstoffharz in einer Menge von 2 bis 20 Gew.-%, vorzugsweise 3 bis weniger als 10 Gew.-%, insbesondere 3 bis 9 Gew.-% bezogen auf die Schicht. Kohlenwasserstoffharze sind niedermolekulare Polymere, deren mittleres Molekulargewicht (Gewichtsmittel Mw) im allgemeinen in einem Bereich von 300 bis 8 000, vorzugsweise 400 bis 5 000, vorzugsweise 500 bis 2 000, liegt. Damit ist das mittlere Molekulargewicht der Harze deutlich niedriger als das der Propylenpolymeren, welche die Hauptkomponente der Basisschicht bilden und im allgemeinen ein mittleres Molekulargewicht von über 100 000 haben.

Bei den geeigneten niedrigmolekularen Harzen handelt es sich um natürliches oder synthetisches Harz mit einem Erweichungspunkt von 60 bis 180 °C, vorzugsweise 80 bis 150 °C, bestimmt nach ASTM E-28. Unter den zahlreichen niedrigmolekularen Harzen sind die Kohlenwasserstoffharze bevorzugt, und zwar in Form der Erdölharze (Petroleumharz), Styrolharze, Cyclopentadienharze und Terpenharze (diese Harze sind in Ullmanns Encyklopädie der technischen Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel C₁₀H₁₆, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifzierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in den Zwischenschichten eingesetzt.

Die Basisschicht der Folie weißt im allgemeinen einen E-Modul von kleiner 3000 N/mm², vorzugsweise 1800 bis 2800 N/mm², auf, da für die üblichen Verwendungszwecke einer siegelfähigen Verpackungsfolie keine besonderen mechanischen Eigenschaften oder Dreheigenschaften gefordert sind.

Die erfindungsgemäße Polyolefinfolie umfaßt weiterhin mindestens eine, vorzugsweise beidseitig siegelfähige Deckschicht/en. Diese Deckschicht/en enthält/enthalten im wesentlichen siegelfähige Polymere aus α-Olefinen mit 2 bis 10 Kohlenstoffatomen und Siliconöl sowie gegebenenfalls weitere Additive in jeweils wirksamen Mengen. Im allgemeinen enthält/enthalten die Deckschicht/en 75 bis nahezu 100 Gew.-%, insbesondere 90 bis 99,5 Gew.-%, des siegelfähigen α-olefinischen Polymers.

Beispiele für derartige siegelfähige α-olefinische Polymere sind
ein Copolymer von
   Ethylen und Propylen oder
   Ethylen und Butylen-1 oder
   Propylen und Butylen-1 oder
ein Terpolymer von
   Ethylen und Propylen und Butylen-1 oder
eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,
   wobei insbesondere statistische Ethylen-Propylen-Copolymere mit
   einem Ethylengehalt von 1 bis 10 Gew.-%, bevorzugt 2,5 bis 8 Gew.-%, oder
statistische Propylen-Butylen-1-Copolymere mit
   einem Butylengehalt von 2 bis 25 Gew.-%, bevorzugt 4 bis 20 Gew.-%, jeweils bezogen auf das Gesamtgewicht des Copolymeren, oder statistische Ethylen-Propylen-Butylen-1-Terpolymere mit
   einem Ethylengehalt von 1 bis 10 Gew.-%, bevorzugt 2 bis 6 Gew.-%, und
   einem Butylen-1-Gehalt von 2 bis 20 Gew.-%, bevorzugt 4 bis 20 Gew.-%,
jeweils bezogen auf das Gesamtgewicht des Terpolymeren, oder ein Blend aus einem Ethylen-Propylen-Butylen-1-Terpolymeren und einem Propylen-Butylen-1-Copolymeren
   mit einem Ethylengehalt von 0,1 bis 7 Gew.-%
   und einem Propylengehalt von 50 bis 90 Gew.-%
   und einem Butylen-1-Gehalt von 10 bis 40 Gew.-%,
jeweils bezogen auf das Gesamtgewicht des Polymerblends, bevorzugt sind.

Die vorstehend beschriebenen Co- und Terpolymeren weisen im allgemeinen einen Schmelzflußindex von 1,5 bis 30 g/10 min, vorzugsweise von 3 bis 15 g/10 min, und einen Schmelzpunkt im Bereich von 120 bis 140 °C auf. Das vorstehend beschriebene Blend aus Co- und Terpolymeren hat im allgemeinen einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

Die erfindungsgemäße Mehrschichtfolie umfaßt zumindest die vorstehend beschriebene Basisschicht und beidseitig siegelfähige Deckschichten, welche die vorstehend beschriebenen siegelfähigen Propylenpolymeren oder Mischungen daraus enthält. Je nach ihrem vorgesehenen Verwendungszweck kann die Mehrschichtfolie Zwischenschicht/en auf der Oberfläche der Basisschicht aufweisen. In einer bevorzugten Ausführungsform ist die Mehrschichtfolie dreischichtig, wobei die Zusammensetzung der Deckschichten nicht notwendigerweise identisch sein muß, aber sein kann.

Die Dicke der Deckschicht/en ist größer als 0,4 µm und liegt vorzugsweise im Bereich von 0,6 bis 4 Um, insbesondere 0,8 bis 2 µm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 70 µm, insbesondere 10 bis 50 µm, wobei die Basisschicht etwa 50 bis 90 % der Gesamtfoliendicke ausmacht.

Wie vorstehend erläutert können die Basisschicht und die Deckschichten zusätzlich weitere übliche Additive in jeweils wirksamen Mengen enthalten. Derartige übliche Additive sind vorzugsweise Stabilisatoren, Neutralisationsmittel, Antistatika und Antiblockmittel.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g. Im allgemeinen wird das Neutralisationsmittel in einer Menge von 0,02 bis 0,1 Gew.-% zugesetzt.

Bevorzugte Antistatika sind Alkali-alkansulfonate und/oder die im wesentlichen geradkettigen und gesättigten aliphatischen, tertiären Amine. Tertiäre aliphatische Amine umfassen Verbindungen der allgemeinen Formel R₃N, worin R einen Fettsäurerest oder einen C₁₂-C₁₈-Alkylrest oder einen hydroxy-substituierten Alkylrest bedeutet, wobei die Reste R gleich oder verschieden sein können. Hydroxy-substituierte Alkylreste sind bevorzugt Hydroxyethyl-, Hydroxypropyl- oder Hydroxybutylreste. Besonders bevorzugt sind N,N-bis(2-hydroxyethyl)-alkylamine. Die tertiären aliphatischen Amine werden besonders günstig in einer Menge von 0,05 bis 1,0 Gew.-% eingesetzt, wobei 0,1 bis 0,3 Gew.-% besonders vorteilhaft sind. Als Antistatikum ist weiterhin Glycerinmonostearat geeignet.

Als Carbonsäureamide sind Amide einer wasserlöslichen Carbonsäure mit 8 bis 24 C-Atomen oder Mischungen dieser Amide umfaßt. Insbesondere sind Erucasäureamid, Ölsäureamid, Stearinsäureamid und ähnliche bevorzugt. Es hat sich als besonders vorteilhaft erwiesen, das Amid nur in die Basisschicht der Mehrschichtfolie einzuarbeiten, bevorzugt in einer Menge von 0,1 bis 0,3 Gew.-%; besonders günstig ist eine Menge von 0,15 bis 0,25 Gew.-% (bezogen auf die Basisschicht).

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und an der zur Behandlung vorgesehenen Oberflächenschicht einem Verfahren zur Erhöhung der Oberflächenspannung ausgesetzt wird, wobei Corona- oder Flammbehandlung bevorzugt ist.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt. Es hat sich als besonders günstig erwiesen, die Abzugswalze oder -walzen, durch die die ausgepreßte Folie auch abgekühlt und verfestigt wird, bei einer Temperatur von 50 bis 110 °C zu halten.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 10:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

Die Temperaturen, bei denen Längs- und Querstreckung durchgeführt werden, können variieren. Im allgemeinen wird die Längsstreckung vorzugsweise bei 120 bis 150 °C und die Querstreckung vorzugsweise bei 155 bis 190 °C durchgeführt.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Aufwickeleinrichtung aufgewickelt.

Wie bereits Eingangs erwähnt wird die Folie nach der biaxialen Streckung auf mindestens einer Oberfläche nach einer der bekannten Methoden vorzugsweise corona- oder flammbehandelt.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die Erfindung wird nun anhand von Ausführungsbeispielen noch näher erläutert.

### Beispiel 1

Es wurde durch Coextrusion und anschließende stufenweise Orientierung in Längs- und Querrichtung eine dreischichtige Folie mit einer Gesamtdicke von 20 µm und einem Schichtaufbau ABA hergestellt, d. h. die Basisschicht war von zwei gleichen Deckschichten A umgeben. Die Deckschichten hatten eine Dicke von jeweils 0,7 µm. Die Folie wurde vor der Aufrollung einer einseitigen Coronabehandlung unterzogen. Die Oberflächenspannung der Folie betrug auf der behandelten Seite infolge dieser Behandlung ca 36 mN/m.

Alle Schichten enthielten zur Stabilisierung 0,13 Gew.-% Pentaerythrityl-Tetrakis-4-(3,5-ditertiärbutyl-4-hydroxyphenyl)-propionat (®Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 4 Gew.-% und einem Schmelzpunkt von 160 bis 162 °C. Der Schmelzflußindex des Polypropylenhomopolymeren betrug 3,2 g/10 min bie 230 °C und 21,6 N Belastung (DIN 53 735). Die Basisschicht enthielt 10 Gew.-% bezogen auf das Gewicht der Basisschicht eines Kohlenwasserstoffharzes mit einem Schmelzpunkt von etwa 140°C (erhältlich als Harz-Masterbatch Exxelor PA 609 von Exxon Chemicals Deutschland)

Die siegelfähigen polyolefinischen Deckschichten bestanden im wesentlichen aus einem Ethylen-Propylen-Butylen-1-Terpolymeren mit einem Gehalt von 3 Gew.-% Ethylen, 88,5 Gew.-% Propylen und 8 Gew.-% Butylen-1.

Die Deckschichten enthielten 0,33 Gew.-% eines Siliciumdioxids mit einem mittleren Teilchendurchmesser von 4 µm bzw. 2 um und 0,8 Gew.-% eines Polydimethylsiloxans mit einer Viskosität von 30.000 Centistokes.

Im einzelnen wurden die folgenden Bedingungen bei der Folienherstellung gewählt:
- Extrusion:: Extrusionstemperatur 260 °C
- Längsstreckung:: Streckwalze T = 135 °C
Längsstreckung um den Faktor 6
- Querstreckung:: Aufheizfelder T = 180 °C
Streckfelder T = 177 °C
Querstreckung um den Faktor 8
- Fixierung:: Temperatur T = 155 °C
- Coronabehandlung:: Spannung: 10 000 V
Frequenz: 10 000 Hz

Die so hergestellte Folie wies auf der coronabehandelten Oberfläche eine Oberflächenspannung (Tintenmethode) von 36mN/m auf. Es wurden die beiden vorbehandelten Siegelschichten gegeneinander gesiegelt bei einer Temperatur von 130 °C (Siegelzeit 0,5 sec und Anpreßdruck 10 N/cm2). Die Siegelnahtfestigkeit betrug etwa 1,1 N/15mm. Bei einer Temperatur von 140°C (Siegelzeit 0,15 sec und Anpreßdruck von 0,35N/cm²) betrug die Siegelnahtfestigkeit 1,2 N/15mm.

### Vergleichbeispiel 1

Es wurde eine Folie wie in Beispiel 1 beschrieben hergestellt mit dem einzigen Unterschied, daß der Basisschicht kein Harz zugefügt wurde. Die Ergebnisse sind in Tabelle 1 zusammengefaßt.

### Vergleichsbeispiel 2

Es wurde eine Folie wie in Beispiel 1 beschrieben hergestellt mit dem einzigen Unterschied, daß der vorbehandelten Deckschicht kein Siliconöl zugefügt wurde. Die Ergebnisse sind in Tabelle 1 zusammengefaßt.

### Vergleichbeispiel 3

Es wurde eine Folie wie in Beispiel 1 beschrieben hergestellt mit dem einzigen Unterschied, daß keine der Oberflächen coronabehandelt wurde. Die Ergebnisse sind in Tabelle 1 zusammengefaßt.

Die Beispiele und Vergleichsbeispiele zeigen, daß das Harz überraschenderweise die Vernetzung des Siliconöls bei der Coronabehandlung der siliconölhaltigen Deckschicht verhindert. Dadurch bleibt die Siegelfähigkeit der Folie erhalten. Die Verwendung von Harz in Polypropylenfolien als solche ist lange bekannt. Ebenso ist bekannt, daß Harz die mechanischen Eigenschaften von Folien und deren Barriere verbessert. Aber es war völlig überraschend, daß Harz in der Folie die bekannte Vernetzung von Silikonöl bei Coronabehandlung verhindert. Diese Erfindung eröffnet neue Wege, um Folien herzustellen, welche durch die Oberflächenbehandlung sehr gut bedruckbar sind, gleichzeitig sehr gute Gleiteigenschaften durch das Silikonöl haben, aber dennoch hervorragende Siegeleigenschaften aufweisen. Bisher war der einzige mögliche Weg eine derartige Eigenschaftskombination an einer Folie zu realisieren das in Fachkreisen als 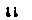 Abklatschverfahren 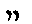 bekannte Verfahren.

Zur Charakterisierung der Rohstoffe und der Folien wurden die folgenden Meßmethoden benutzt:

### Schmelzflußindex

Der Schmelzflußindex wurde in Anlehnung an DIN 53 735 bei 21,6 N Belastung und 230 °C bzw. bei 50 N Belastung und 190 °C gemessen.

### Schmelzpunkt

DSC-Messung, Maximum der Schmelzkurve, Aufheizgeschwindigkeit 20 °C/min.

### Trübung

Die Trübung der Folie wurde in Anlehnung an ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Siegelnahtfestigkeit

Zur Bestimmung wurden zwei 15 mm breite Folienstreifen übereinandergelegt und bei 130 °C bzw. bei 140°C, einer Siegelzeit von 0,5 s bzw. 0,15 sec und einem Siegeldruck von 10 N/cm² bzw. 0,35N/cm² (Gerät: Brugger Typ NDS, einseitig beheizte Siegelbacke) gesiegelt. Die Siegelnahtfestigkeit wurde nach der T-Peel-Methode bestimmt.

### Reibung

Die Reibung wurde in Anlehnung an DIN 53 375 bestimmt.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

### Bestimmung der Siegelanspringtemperatur;

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm² bzw. 0,35 N/cm2 und einer Siegeldauer von 0,5 s bzw. 0,15 sec gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

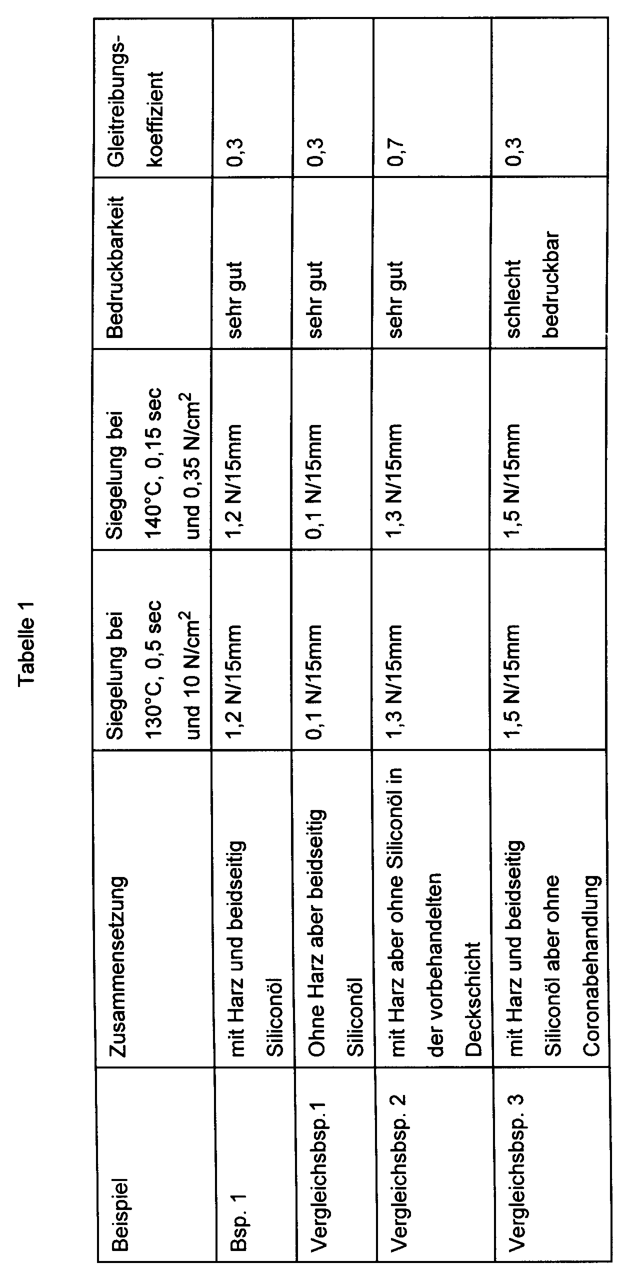

## Patentansprüche

1. Beidseitig siegelfähige, bedruckbare, orientierte Polyolefin-Mehrschichtfolie, aus mindestens einer Basisschicht und beidseitigen siegelfähigen Deckschichen, dadurch gekennzeichnet, daß die Folie ein Kohlenwasserstoffharz enthält und beide Deckschichten Silikonöl enthalten und mindestens eine Oberfläche der Folie oberflächenbehandelt ist.

2. Polyolefin-Mehrschichtfolie nach Anspruch 1, dadurch gekennzeichnet, daß das Kohlenwasserstoffharz in der Basisschicht enthalten ist.

3. Polyolefin-Mehrschichtfolie nach Anspruch 1, dadurch gekennzeichnet, daß das Kohlenwasserstoffharz in der Deckschicht/en und/oder Zwischenschicht/en enthalten ist.

4. Polyolefin-Mehrschichtfolie nach einem der Ansprüche 1 und/oder 2, dadurch gekennzeichnet, daß das SiO₂ einen mittleren Teilchendurchmesser von 2 bis 5 µm, vorzugsweise 4 µm, aufweist.

5. Polyolefin-Mehrschichtfolie nach einem oder mehreren der Ansprüche 1 bis 3, dadurch gekennzeichnet, daß die Basisschicht 0,05 bis 0,25 Gew.-% (bezogen auf die Basisschicht) tertiäres aliphatisches Amin enthält.

6. Polyolefin-Mehrschichtfolie nach einem oder mehreren der Ansprüche 1 bis 5, dadurch gekennzeichnet, daß die Deckschichten 0,2 bis 0,5 Gew.-% (bezogen auf die jeweilige Deckschicht) Siliconöl enthält.

7. Polyolefin-Mehrschichtfolie nach einem oder mehreren der Ansprüche 1 bis 5, dadurch gekennzeichnet, daß die Deckschicht/en mehr als 0,1 Gew.-% (bezogen auf die jeweilige Deckschicht) Antiblockmittel enthält/enthalten.

8. Polyolefin-Mehrschichtfolie nach einem oder mehreren der Ansprüche 1 bis 6, dadurch gekennzeichnet, daß die Folie einen Reibungskoeffizienten von 0,2 bis 0,3 und eine Oberflächenspannung von >34mN/m aufweist.

9. Polyolefin-Mehrschichtfolie nach einem der Ansprüche 8 und/oder 9, dadurch gekennzeichnet, daß die Verarbeitung die Bedruckung oder Kaschierung der Mehrschichtfolie umfaßt.

10. Verfahren zur Herstellung der Polyolefin-Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 80 und 110 °C liegt, abgezogen wird, die Folie biaxial gestreckt wird mit einem Längsstreckverhältnis von 4:1 bis 7:1 und einem Querstreckverhältnis von 8:1 bis 10:1, die biaxial gestreckte Folie thermofixiert oberflächenbehandelt und anschließend aufgewickelt wird.

11. Verwendung einer Polyolefin-Mehrschichtfolie nach einem oder mehreren der Ansprüche 1 bis 10 als Verpackungsfolie.

12. Verwendung einer Polyolefin-Mehrschichtfolie nach einem oder mehreren der Ansprüche 1 bis 10 zur Weiterverarbeitung, vorzugsweise zur Bedruckung und/oder Kaschierung.

13. Laminat, umfassend eine Polyolefin-Mehrschichtfolie nach einem oder mehreren der Ansprüche 1 bis 10 und Papier oder Pappe oder weitere Folie aus thermoplastischem Kunststoff.
